# EUROPÄISCHE PATENTSCHRIFT

(11) **EP 3 042 211 B1**
(45) Veröffentlichungstag und Bekanntmachung des Hinweises auf die Patenterteilung: **22.01.2020**
(21) Anmeldenummer: 14755636.9
(22) Anmeldetag: 18.08.2014
(51) Int. Cl.: G01P 15/135, G01P 15/08, B60T 8/172

(54) **BESCHLEUNIGUNGSSENSOR, INSBESONDERE DUPLEX-BESCHLEUNIGUNGSSENSOR, ANORDNUNG UND VERFAHREN ZUM DETEKTIEREN EINES HAFTUNGSVERLUSTS EINES FAHRZEUGRADES**
ACCELERATION SENSOR, ESPECIALLY DUPLEX ACCELERATION SENSOR, ARRANGEMENT AND METHOD FOR DETECTING A LOSS OF ADHESION OF A VEHICLE TIRE
CAPTEUR D'ACCÉLÉRATION, EN PARTICULIER CAPTEUR D'ACCÉLÉRATION DUPLEX, ET AGENCEMENT ET PROCÉDÉ DE DÉTECTION D'UNE PERTE D'ADHÉRENCE D'UNE ROUE DE VÉHICULE

(30) Priorität: 03.09.2013 DE 102013217478
(43) Veröffentlichungstag der Anmeldung: 13.07.2016
(73) Patentinhaber: Grundmann, Bert, 27777 Ganderkesee (DE)
(72) Erfinder: Grundmann, Bert, 27777 Ganderkesee (DE)
(74) Vertreter: Eisenführ Speiser
(86) Internationale Anmeldenummer: PCT/EP2014/067585
(87) Internationale Veröffentlichungsnummer: WO 2015/032613

(56) Entgegenhaltungen:
- EP-A1- 0 474 352
- EP-A1- 2 581 258
- EP-A2- 0 317 962
- DE-A1- 2 600 145
- DE-A1- 2 644 606
- DE-A1- 3 506 758
- DE-A1- 19 602 428
- DE-A1-102004 051 654
- DE-A1-102005 036 531
- JP-A- 2001 155 601
- US-A- 3 668 629
- US-A- 3 715 003
- US-A1- 2001 029 420

## Beschreibung

Die Erfindung betrifft einen, insbesondere direkten, Beschleunigungssensor, eine Anordnung sowie ein Verfahren zum Detektieren eines, insbesondere longitudinalen, Haftungsverlusts eines Fahrzeugrades.

Unter dem Begriff Fahrzeugrad ist im Rahmen der vorliegenden Erfindung eine Felge mit einem Reifen zu verstehen, wobei der Reifen einen Kontakt mit der Fahrbahn herstellt, auf der sich das Fahrzeug bewegt. Unter einem Fahrzeug wird hier insbesondere ein Personenkraftwagen (PKW) verstanden. Der Begriff "Haftungsverlust" ist derart zu verstehen, dass der Reifen rutscht oder zumindest teilweise durchdreht. D.h. bei idealer Haftung entspricht die Rotationsgeschwindigkeit des Reifens der Geschwindigkeit des Fahrzeugs auf der Fahrbahn (*für Motorsportzwecke liegt die ideale Haftung bei 10-20 % Schlupf). Bei einem Haftungsverlust entsteht (kurzzeitig oder für einen längeren Zeitraum) eine Differenz zwischen Rotationsgeschwindigkeit des Reifens und der Geschwindigkeit des Fahrzeugs auf der Fahrbahn.

Indirekte Beschleunigungssensoren, Rechenschaltungen, Anordnungen und Verfahren zum näherungsweisen Detektieren sind aus dem Stand der Technik grundsätzlich bekannt. Aus der DE 821 562 ist ein Gerät (positioniert am Armaturenbrett) zur Überwachung der beim Befahren von Kurven auftretenden Fliehkraft auf das ganze Fahrzeug kannt. Dabei wird weder eine Beschleunigung in Fahrtrichtung ermittelt noch das Verhalten einzelner Räder.

So sind, insbesondere indirekte, Beschleunigungssensoren an sich beispielsweise bekannt aus der DE 198 13 941 A1, DE19930779A1, US 2009/0071249 A1, DE 10 2009 021 567 A1. Verfahren zur Auswertung von Beschleunigungssensoren, die an oder in einem Fahrzeugrad angeordnet sind, sind bekannt aus EP 0 517 082 A2, US 2011/0082663 A1, WO 2005 069 993 A2, DE 102 23 214 A1, DE 11 2011 100 969 T5, DE 10 2007 014 765 A1. In der US 2009/0071249 A1 wird insbesondere ein Beschleunigungssensor beschrieben, welcher in einem Reifen eines Fahrzeugs angeordnet ist. Zudem wird beschrieben, dass ein Beschleunigungssensor verwendet wird zum Detektieren einer Vibration des Reifens in Umlaufrichtung und ein weiterer Beschleunigungssensor verwendet wird zum Detektieren einer Vibration in Richtung der Weite des Reifens, so dass ein Fahrbahn-Reibungskoeffizient ermittelt werden kann.

Ferner ist aus der DE 32 06 694 A1 eine Rechenschaltung zur Überwachung des Schlupfes an Rädern von Kraftfahrzeugen bekannt. Dabei wird an jedem Rad die jeweilige Radumdrehung gezählt und (bei entsprechender Differenz) aus zwei aufeinanderfolgenden Signalen die Radbeschleunigung berechnet. Die DE 10 2007 052 749 A1 offenbart ein Verfahren zum Errechnen von Radschlupf. Hierbei wird das auf wenigstens ein Rad wirkende Antriebsmoment variiert und die Reaktion des Rades (Geschwindigkeit) auf die Änderung gemessen und ausgewertet. Aus der US2005/0033499 A1 ist ein Verfahren zur Abschätzung der Haftreibung zwischen Rad und Straße bekannt. Dabei wird auf einer ersten Achse ein positives Drehmoment und an der Hinterachse ein negatives Drehmoment angelegt, wodurch unter Anderem der Haftreibungskoeffizient bestimmt wird. Aus der US 3,744,850 ist ein Regelsystem für die Radtraktion offenbart, das automatisch den Radschlupf mit der maximalen Traktion ermittelt und diese durch Brems- und Antriebseingriff beibehält. Dazu wird ein Quotient aus linearer Beschleunigung und Winkelbeschleunigung gebildet.

Die DE 196 02 428 A1 beschreibt eine Warnblinkanordnung für ein Fahrzeug mit einem ersten Sensor, welcher auf hohe Beschleunigungen und/oder Verzögerungen durch Signalgabe anspricht, um die Warnblinkanordnung einzuschalten. Die DE 26 00 145 A1 lehrt ein zum Tragen am Handgelenk bestimmtes Instrument mit elektrischen Kontakten, die zum Sichtbarmachen der Anzeige des Instruments geschlossen werden müssen. Die DE 35 06 758 A1 offenbart eine Vorrichtung zur Beschleunigungsmessung, bei der ein magnetisch beeinflussbarer Körper durch eine auf den Körper wirkende Beschleunigung aus seiner durch ein Magnetfeld gehaltenen Ruhelage verändert wird. Die EP 0 317 962 A2 beschreibt einen Beschleunigungssensor für Sicherheitssysteme von Kraftfahrzeugen, vorzugsweise für Sicherheitsgurtsysteme und sogenannte Schloßstrammer. Die DE 10 2004 051 654 A1 lehrt ein Verfahren zur Bestimmung einer Änderung der Haftung eines über einen Untergrundbelag bewegten Gegenstandes, insbesondere eines über den Straßenbelag rollenden Fahrzeugreifens. Die US 3 668 629 A beschreibt Mittel zum Erkennen des Zeitpunkts, in dem ein Rad rutscht oder in dem ein Rad durchdreht. Die EP 0 474 352 A1 beschreibt einen Beschleunigungssensor mit einem Rohr, das aus einem elektrisch leitfähigen, nichtmagnetischen Material besteht. Die US 3 715 003 A beschreibt ein Steuerungssystem zur Vermeidung von schwingenden Anhängern.

Vor diesem Hintergrund ist es Aufgabe der Erfindung, einen verbesserten, insbesondere direkten, Beschleunigungssensor, eine Anordnung und ein Verfahren zum Detektieren eines Haftungsverlusts eines Fahrzeugrades zu schaffen, insbesondere eine Detektion eines Haftungsverlusts zu erzielen, bevor das Fahrzeug, insbesondere das ganze Fahrzeug, ein stabiles Fahrverhalten verlässt.

Diese Aufgabe wird erfindungsgemäß gelöst durch einen Beschleunigungssensor der eingangs genannte Art, umfassend einen Tubus, mit einer Längsachse, die einen Kreisbogenabschnitt bildet, und mit zwei geschlossenen Enden, eine Masse, die innerhalb des Tubus und in Längsrichtung des Tubus beweglich angeordnet ist, eine Magnetanordnung, welche ausgebildet ist, mittels einer auf die Masse ausgeübten magnetischen Kraft einer Bewegung der Masse aus einer Ruheposition entgegenzuwirken, und eine Ausleseeinheit, welche ausgebildet ist, eine Bewegung der Masse aus der Ruheposition zu detektieren, wobei vorzugsweise der Tubus derart am Fahrzeugrad angeordnet ist, dass eine Bewegung der Masse aus der Ruheposition dann erfolgt, wenn sich die Beschleunigung des Fahrzeugrades (in Drehrichtung des Fahrzeugrades) ändert.

Der Erfindung liegt die Erkenntnis zugrunde, dass bekannte Unfallvermeidungs- und Fahrdynamiksysteme, wie beispielsweise ESC (Electronic Stability Control; häufig auch als ESP bezeichnet), erst spät eingreifen, nämlich dann, wenn das gesamte Fahrzeug bereits eine stabile Fahrsituation weitgehend verlassen hat. Zudem erfolgt das Eingreifen dann vollständig durch das Fahrzeug. Das unfallvermeidende Potential eines Fahrzeugführers, also seine eigentlich immer anzunehmende Bereitschaft zur Mitverantwortung, wird dabei in der Vorphase nicht genutzt. Besonders auffällig wird dies bei Massenkollisionen infolge von Starkregen, Schneefall und/oder Eisbildung aber auch bei Individualunfällen aufgrund eines geringen Reifenprofils oder unangemessener Reifenspezifikation (Sommerreifen im Winter) oder Verlust des Anpressdrucks aufgrund mangelnder Aerodynamik bei hoher Geschwindigkeit. Bei den vorstehend genannten Fahrsituationen tritt im Ergebnis jeweils ein signifikanter Verlust der Haftung der Fahrzeugräder auf, welcher dem Fahrzeugführer in diesem Ausmaß bis zu seinem Unfall nicht bewusst ist. Würde man den Fahrzeugführer frühzeitig über den, sich im Allgemeinen ankündigenden und beginnenden, Haftungsverlust informieren, könnte dieser sofort reagieren und selbständig zur eigenen Unfallvermeidung beitragen.

Es wurde mit der Erfindung weiter erkannt, dass ein signifikanter Haftungsverlust durch Wasser-, Schnee-, Eisglätte sowie mangelndem Anpressdruck nicht blitzartig vollständig erfolgt. Stattdessen kündigt sich der Haftungsverlust in der Regel nur an einzelnen Reifen bereits in einer Vorphase an, ohne dass es für den Fahrzeugführer oder durch aus dem Stand der Technik bekannte Assistenzsysteme (z.B. ESC) erkannt wird, da es zu Beginn des Haftungsverlusts noch zu keinem Verlust an Fahrstabilität kommt. Bei den im Stand der Technik bekannten Systemen reagieren daher weder die Drehraten- und Querbeschleunigungssensoren des ESC noch die Propriozeption (d.h. die subjektive Eigenwahrnehmung) des Fahrzeugführers.

Insbesondere Wasserglätte tritt nicht in Form von einer blitzartigen, mehrere Millimeter dicken und geschlossenen Wasserdecke auf, die einen Reifen sofort und vollständig aufschwimmen lässt, sondern beginnt bei einsetzendem Regen sowie beim Einfahren in eine schon länger bestehende Regenzone mit einem gefleckten Übergangsbereich ("spotted area"). Auch verschneite oder vereiste Fahrbahnen sind nicht abrupt durchgängig glatt, sondern meist nur in einem relativ schmalen Temperaturband. Auch dieser Übergang geschieht für das Fahrzeug nicht blitzartig, sondern meist mit einem gefleckten Übergangsbereich. Schließlich erfolgt der Verlust von Anpressdruck bei zunehmender Geschwindigkeit ebenfalls nicht schlagartig, sondern beginnt aufgrund von stets vorhandenen Fahrbahnunebenheiten mit vereinzeltem "Tanzen" eines Reifens. In allen drei vorstehend genannten Situationen kommt es in der Übergangsphase zunächst an einzelnen Rädern zu, u.U. nur sehr kurzfristigem, inadäquatem Drehverhalten. Entweder drehen die einzelnen (Antriebs-) Räder zu schnell (kurzfristiges "Mkro-Durchdrehen") oder zu langsam (kurzfristiges "Mikro-Blockieren"), insbesondere beim Bremsen oder Schleppmoment. Mit anderen Worten: Es treten, kurze, insbesondere ultrakurze Dreh(zahl)schwankungen, insbesondere am einzelnen Rad, auf, die mittels der aus dem Stand der Technik bekannten Systeme nicht oder nur unzureichend detektiert werden.

Diese und andere Probleme werden durch den erfindungsgemäßen Beschleunigungssensor gelöst bzw. reduziert, welcher eine hohe und gleichzeitig geschwindigkeitsunabhängige Empfindlichkeit auch bei hohen Geschwindigkeiten des Fahrzeugs aufweist. Der erfindungsgemäße direkte Beschleunigungssensor weist eine hohe und nahezu gleichbleibend geschwindigkeitsunabhängige Empfindlichkeit auch bei den entscheidend hohen Geschwindigkeiten des Fahrzeugs auf im Gegensatz zu den vorbekannten indirekten Systemen, wie sie beispielsweise auf Seite 22, Zeilen 15ff. der DE 32 06 694 A1 beschrieben sind: "Die unterschiedlichen und mit wachsender Geschwindigkeit des Fahrzeuges steigenden Beschleunigungsdifferenzschwellwerte sind deswegen erforderlich, da sich bei höheren Geschwindigkeiten höhere Beschleunigungsdifferenzstörwerte aus Straßenunebenheiten ergeben"). Zudem kann mittels des erfindungsgemäßen Beschleunigungssensors jedes Fahrzeugrad einzeln detektiert werden, ohne dass eine Drehung des Fahrzeugrades in Relation zu den anderen Rändern detektiert werden muss.

Neben der Unfallvermeidung kann der erfindungsgemäße Beschleunigungssensor auch zur Feinabstimmung für den Motorsport verwendet werden (es lässt sich beispielsweise exakt ein gewünschter Schlupf einstellen) und die aus dem Stand der Technik bekannten Raddrehzahlsensoren für ESC ergänzen oder auch komplett ersetzen.

Der Tubus ist vorzugsweise derart am Fahrzeugrad angeordnet, dass eine Bewegung der Masse aus der Ruheposition dann erfolgt, wenn sich die Beschleunigung des Fahrzeugrades, insbesondere in Drehrichtung des Fahrzeugrades, ändert. Auf diese Weise detektiert der erfindungsgemäße Beschleunigungssensor über die Trägheit der Masse direkt eine Veränderung der Beschleunigung des Fahrzeugrades, was einen, insbesondere longitudinalen, Haftungsverlust bedeuten kann. Insbesondere, wenn das Fahrzeug nicht beschleunigt oder abgebremst wird, sollte ohne Haftungsverlust keine Veränderung der Beschleunigung des Fahrzeugrades eintreten. Ist dies doch der Fall, kann dies auf einen Haftungsverlust des Fahrzeugrades hindeuten, was durch den erfindungsgemäßen Beschleunigungssensor direkt detektiert werden kann, insbesondere ohne dass ein oder mehrere Sensorsignale zuvor ausgewertet oder weiterverarbeitet werden müssten.

Die Erfindung beruht unter anderem auf der Erkenntnis, dass existierende Sensoren oder Systeme zur Ermittlung des Radschlupfes insbesondere auch deshalb ungenau, fehleranfällig und/oder langsam sind, da
a. die Änderung der Beschleunigung eines einzelnen Rades nicht direkt und unmittelbar detektiert und zur Anzeige gebracht wird, sondern indirekt über eine Auswertung oder Ableitung anderer Signale oder eine Berechnung aus anderen Signalen. Der erfindungsgemäße Sensor ermittelt jedoch die den Haftungsverlust anzeigende Beschleunigungsänderung eines einzelnen Rades als Trägheitssensor direkt und unmittelbar;
b. die entscheidend gefährlichen Haftungsverlustsituationen sich im hohen Geschwindigkeitsbereich (80-200 km/h) abspielen, wenn ultrakurzes inadäquates Drehverhalten einzelner Räder im höheren Grundrauschen einfach untergeht, wie beispielsweise in der DE 32 06 694 A1. Der erfindungsgemäße direkte Drehmoment-Sensor hingegen behält auch bei hohen Geschwindigkeiten weitgehend seine Empfindlichkeit; und
c. auch ESP in diesem Geschwindigkeitsbereich bei meist vollständigem Haftungsverlust leider keinen wirksamen Effekt mehr aufbauen kann.

Der erfindungsgemäße Beschleunigungssensor ist im Einbauzustand vorzugsweise an oder in einem rotierenden Teil des Fahrzeugrads angeordnet, insbesondere an oder in einem Reifen, einer Felge oder einer Bremsscheibe. Weiter vorzugsweise erstreckt sich der Tubus im Einbauzustand im Wesentlichen über einen Kreisbogenabschnitt in Rotationsrichtung des Fahrzeugrades. Der Radius des Kreisbogenabschnitts entspricht dabei bevorzugt dem Radius des Fahrzeugrades an der Einbauposition, d.h. dem Abstand des Tubus vom Mittelpunkt des Fahrzeugrades, oder kleiner, wenn zur Hemmung keine anderen Bauteile eingesetzt werden sollen. Wird der Beschleunigungssensor beispielsweise im äußeren Bereich des Reifens eingebaut, entspricht der Radius des Kreisbogenabschnitts etwa dem Außenradius des Reifens. Die Bewegung der Masse in Längsrichtung entspricht vorzugsweise einer Bewegung entlang der Längsachse des Kreisbogenabschnitts und somit einer Bewegung in oder entgegen der Rotationsrichtung des Fahrzeugrades.

Weiter vorzugsweise ist der Tubus im Wesentlichen holzylinderförmig und geschlossen ausgebildet. Bevorzugt besteht der Tubus aus Kunststoff, insbesondere aus einem gehärteten Kunststoff, Keramik oder nicht-ferromagnetischem Metall. Dadurch kann der Beschleunigungssensor mechanischen Belastungen standhalten. Zudem kann der Beschleunigungssensor geschlossen von Kunststoff umgeben sein (z.B. in Kunststoff gegossen sein). Dadurch wird der Beschleunigungssensor widerstandsfähig beispielsweise gegenüber Schmutz, Flüssigkeit und Staub. Die Masse ist vorzugsweise kugelförmig ausgebildet. Dadurch wird der Verschleiß des Beschleunigungssensors minimiert. So kann ein Beschleunigungssensor über einen gesamten Wartungszyklus, vorzugsweise einen gesamten Lebenszyklus eines Fahrzeugs verwendet werden. Ein Beschleunigungssensor, welcher in einem Reifen eines Fahrzeugs eingebaut ist, wird beim Reifenwechsel ohne Zusatzaufwand mit ausgetauscht. So reicht es bereits aus, wenn der Beschleunigungssensor eine Lebensdauer aufweist, die einem Lebenszyklus eines Reifens entspricht. Weiter vorzugsweise besteht die Masse aus einem ferromagnetischen Material und/oder bildet einen Permanentmagneten.

Besonders bevorzugt ist der Beschleunigungssensor im Bereich der Radnabe, der Achse oder nahe dem Differential angeordnet. In diesen Bereichen des Fahrzeugrades ist der Beschleunigungssensor geschützt vor thermischen und mechanischen Belastungen, wie sie beispielsweise im Reifen oder im Bereich der Bremsscheiben auftreten können.

Weiter vorzugsweise ist der Durchmesser des Tubus wesentlich kleiner als der Radius der Längsachse. Bevorzugt ist ein Verhältnis Durchmesser/Radius im Bereich von 1/400 (beispielsweise mit einem Tubusdurchmesser von 2 mm und einem Reifendurchmesser von 800 mm bei einer mobilen Arbeitsmaschine) bis maximal 1/40 (mit einem Tubusdurchmesser von 10 mm und einem Reifendurchmesser von 400 mm bei einem PKW), insbesondere bei PKWs in einem Bereich von 1/275 (z.B. mit einem Tubusdurchmesser von 2 mm und einem Reifendurchmesser von 550 mm) bis 1/40 (mit einem Tubusdurchmesser von 10 mm und einem Reifendurchmesser von 400 mm). Der Tubus weist bevorzugt eine Länge von wenigen Zentimetern auf. Besonders bevorzugt ist ein Längenverhältnis Durchmesser/Länge des Tubus im Bereich von 1/20 (mit einem Tubusdurchmesser von 2 mm und einer Länge des Tubus von 40 mm) bis 1/6 (mit einem Tubusdurchmesser von 5 mm und einer Länge des Tubus von 30 mm). Bei Verwendung einer kugelförmigen Masse liegt das Verhältnis des Durchmessers der Masse zum Durchmesser des Tubus vorzugsweise in einem Bereich von 1/2 bis 3/4. Besonders bevorzugt ist der Durchmesser der Masse geringfügig kleiner als der Innendurchmesser des Tubus, insbesondere mit einem Verhältnis Massendurchmesser/Innendurchmesser im Bereich von 7/8 bis 9/10, vorzugsweise auch bis zu 95/100. Dadurch werden Bewegungen der Masse quer zur Längsrichtung des Tubus, beispielswiese tanzende Bewegungen in Antwort auf eine Zentrifugalkraft oder Resonanzen in Antwort auf periodisch auf die Masse wirkende Kräfte, verringert.

Die Magnetanordnung umfasst eine den Tubus zumindest teilweise umgebende elektrische Spulenanordnung, insbesondere Kreisbogenspule. Vorzugsweise wird die Magnetanordnung von einer Spulenanordnung gebildet, welche aus einem den Tubus mehrfach umlaufenden Draht besteht. Damit die Spulenanordnung eine magnetische Kraft auf die Masse ausübt, wird der Spulendraht mit elektrischem Strom versorgt. Der Begriff Kreisbogenspule ist bevorzugt derart zu verstehen, dass die Spule um den kreisbogenartig verlaufenden Tubus gewickelt ist und somit quer zur Umlaufrichtung des Drahtes kreisbogenartig verläuft. Vorzugsweise erfolgt die Spannungsversorgung der Spule mittels Induktion oder mittels einer Batterie.

Gemäß einer weiteren bevorzugten Ausführungsform des erfindungsgemäßen Beschleunigungssensors umfasst die Magnetanordnung einen Magnetabschnitt, welcher ausgebildet ist, eine anziehende Kraft auf die Masse auszuüben, wobei die Ruheposition der Masse in Rotationsrichtung des Fahrzeugrades innerhalb des Magnetabschnitts liegt. Der Magnetabschnitt wird vorzugsweise von einem Spulenabschnitt gebildet. Vorzugsweise umgibt der Spulenabschnitt einen mittleren Bereich der Längsachse des Tubus, wobei der mittlere Bereich den Tubus in zwei gleiche Hälften teilt. Eine Bewegung der Masse aus dem mittleren Bereich heraus stellt dabei eine Bewegung der Masse aus der Ruheposition dar.

Nach einer anderen bevorzugten Ausführungsform des erfindungsgemäßen Beschleunigungssensors umfasst die Magnetanordnung zwei Magnetabschnitte, die ausgebildet sind, eine abstoßende Kraft auf die Masse auszuüben, wobei die Ruheposition der Masse in Rotationsrichtung des Fahrzeugrades zwischen den Magnetabschnitten liegt. Vorzugsweise werden die Magnetabschnitte jeweils von einem Spulenabschnitt gebildet. Die beiden Spulenabschnitte umgeben in Längsrichtung des Tubus gesehen vorzugsweise jeweils einen Endbereich des Tubus derart, dass die Masse aufgrund der abstoßenden Kräfte der Spulenabschnitte in einem mittleren Bereich des Tubus in einer Ruheposition gehalten wird.

Nach einer weiteren bevorzugten Ausführungsform des erfindungsgemäßen Beschleunigungssensors umfasst die Ausleseeinheit eine Kontaktfläche, die jeweils an einem Ende des Tubus angeordnet ist, wobei die Ausleseeinheit ausgebildet ist, einen Berührungskontakt der Masse an der Kontaktfläche zu detektieren. Dies stellt eine konstruktiv besonders einfache Ausbildung des Beschleunigungssensors dar, mittels derer die Bewegung der Masse aus der Ruheposition qualitativ detektiert werden kann. Der Beschleunigungssensor kann vorzugsweise derart dimensioniert sein, dass minimale Bewegungsschwankungen der Masse nicht zu einem Berührungskontakt an einer der Kontaktflächen führen.

Gemäß einer weiteren bevorzugten Ausführungsform des erfindungsgemäßen Beschleunigungssensors ist die Ausleseeinheit ausgebildet, die Position der Masse innerhalb des Tubus zu ermitteln. Dies hat den Vorteil, dass anhand der Position der Masse bei Auslenkung aus der Ruhelage ein Grad der Haftung, beispielsweise der Reibungskoeffizient zwischen dem Material des Fahrzeugreifens und der Fahrbahn, ermittelt werden kann. Insbesondere im Motorsport kann eine quantitative Bestimmung des Haftungsgrades zu Optimierungszwecken genutzt werden.

Vorzugsweise ist der Beschleunigungssensor ferner ausgebildet, nur solche Änderungen der Beschleunigung des Fahrzeugrades zu detektieren, die nicht auf einer gewollten Beschleunigung des Fahrzeugs (durch den Fahrzeugmotor) oder einem Bremsvorgang beruhen.

Der erfindungsgemäße Beschleunigungssensor umfasst gemäß einer Fortbildung der oben beschriebenen ersten bevorzugten Ausführungsform eine Steuerungseinheit, welche ausgebildet ist, die mittels der Spulenanordnung auf die Masse ausgeübte Kraft in Abhängigkeit von der auf das Fahrzeugrad mittels der Fahrzeugbremsen und des Fahrzeugmotors ausgeübten Beschleunigung zu steuern. Im Betrieb wird ein Fahrzeug ständig beschleunigt und abgebremst. Diese Kräfte wirken auch auf den Beschleunigungssensor und können die Detektion eines Haftungsverlusts beeinflussen. Gemäß dieser Ausführungsform wird die Kraft, welche die Spulenanordnung auf die Masse ausübt, mittels einer Steuerungseinheit gesteuert. Die Steuerungseinheit berücksichtigt dabei die aktuelle Beschleunigung durch den Fahrzeugmotor und die aktuelle Bremsbeschleunigung durch die Fahrzeugbremsen. Weiter bevorzugt können weitere Effekte wie Motorbremswirkung, Reibungsverluste, Windeinfluss, etc. bei der Steuerung der Spule berücksichtigt werden. Die Steuerung der durch die Spule auf die Masse ausgeübten Kraft erfolgt über eine Steuerung des durch den Spulendraht fließenden Stroms.

Durch diese Ausführungsform wird ein Beschleunigungssensor geschaffen, welcher in einer Vielzahl von Fahrsituationen zuverlässigere Ergebnisse hinsichtlich eines Haftungsverlusts eines Fahrzeugrads bereitstellt. Dabei werden unterschiedliche Beschleunigungseffekte, die auf das Fahrzeugrad wirken, durch eine Steuerung der Spulenanordnung derart eliminiert bzw. reduziert, dass eine Auslenkung der Masse aus der Ruheposition in einer Vielzahl von Fahrsituationen als Haftungsverlust detektiert werden kann.

Die Ausführungsform des Beschleunigungssensors mit Steuerungseinheit hat ferner den Vorteil, dass für unterschiedliche Fahrzeugtypen Beschleunigungssensoren gleicher Abmessung und gleichen Materials verwendet werden können. Dies vereinfacht die Herstellung der Beschleunigungssensoren. Eine Anpassung des Beschleunigungssensors an den Fahrzeugtyp erfolgt vorzugsweise über die Steuerung. So können die Motorleistungen und Bremsleistungen unterschiedlicher Fahrzeugtypen bei der Steuerung berücksichtigt werden, beispielsweise indem die Steuerung beim Fahrzeughersteller oder bei Sportwagen im Fahrzeug selbst über ein Computerprogramm kalibriert wird.

Insbesondere für eine Verwendung im Rahmen eines Feintunings, z.B. im Motorsport, ist die Anwendung der vergleichsweise aufwendigen Ausführungsform mit Steuerungseinheit besonders bevorzugt.

In einer weiteren bevorzugten Ausführungsform des erfindungsgemäßen Beschleunigungssensors ist der Tubus mit einem Fluid zur Dämpfung der Bewegung der Masse gefüllt. Bevorzugt umfasst das Fluid Luft, Wasser und/oder Öl. Gegebenenfalls kann auch ein innertubuläres Bypass-System vorgesehen sein.

Der Beschleunigungssensor umfasst nach einer noch weiteren bevorzugten Ausführungsform mehrere Massen. Die Massen bestehen vorzugsweise jeweils aus einem ferromagnetischen Material und/oder bilden Permanentmagneten. Weiter vorzugsweise sind die Massen jeweils kugelförmig ausgebildet. Vorzugsweise liegt das Verhältnis des Durchmessers einer der kugelförmigen Massen zum Durchmesser des Tubus vorzugsweise in einem Bereich von 1/3 bis 1/10. Die Ausleseeinheit ist vorzugsweise ausgebildet, die Bewegung einer oder mehrerer der Massen aus der Ruheposition zu detektieren. Weiter vorzugsweise ist die Ausleseeinheit ausgebildet, die Position einer oder mehrerer Massen innerhalb des Tubus zu ermitteln. Noch weiter bevorzugt ist die Ausleseeinheit ausgebildet, die örtliche Verteilung der Massen innerhalb des Tubus zu ermitteln.

Die eingangs genannte Aufgabe wird gemäß einem zweiten Aspekt der Erfindung gelöst durch einen Beschleunigungssensor zum Detektieren eines Haftungsverlusts eines Fahrzeugrades, umfassend eine Masse, die entlang eines Kreisbogenabschnitts beweglich angeordnet ist, wenigstens ein Federelement, welches ausgebildet ist, einer Bewegung der Masse aus einer Ruheposition entgegenzuwirken, und eine Ausleseeinheit, welche ausgebildet ist, eine Bewegung der Masse aus der Ruheposition zu detektieren, wobei vorzugsweise die Masse derart am Fahrzeugrad angeordnet ist, dass eine Bewegung der Masse aus der Ruheposition erfolgt, wenn sich die Beschleunigung des Fahrzeugrades, vorzugsweise in Drehrichtung des Fahrzeugrades, ändert, wobei die Masse stockankerförmig ausgebildet ist.

Der erfindungsgemäße Beschleunigungssensor ist im Einbauzustand vorzugsweise an oder in einem rotierenden Teil des Fahrzeugrads angeordnet, insbesondere an oder in einem Reifen, einer Felge oder einer Bremsscheibe. Weiter vorzugsweise erstreckt sich der Kreisbogenabschnitt, entlang dessen die Masse beweglich angeordnet ist, im Wesentlichen in Rotationsrichtung des Fahrzeugrades. Der Radius des Kreisbogenabschnitts entspricht dabei bevorzugt dem Radius des Fahrzeugrades an der Einbauposition, d.h. dem Abstand der Masse vom Mittelpunkt des Fahrzeugrades, oder kleiner, wenn zur Hemmung keine anderen Bauteile eingesetzt werden sollen.

Die Masse ist vorzugsweise derart am Fahrzeugrad angeordnet, dass eine Bewegung der Masse aus der Ruheposition erfolgt, wenn sich die Beschleunigung des Fahrzeugrades, insbesondere in Drehrichtung des Fahrzeugrades, ändert. Auf diese Weise detektiert der erfindungsgemäße Beschleunigungssensor über die Trägheit der Masse direkt eine Veränderung der Beschleunigung des Fahrzeugrades, was einen Haftungsverlust bedeuten kann. Insbesondere, wenn das Fahrzeug nicht beschleunigt oder abgebremst wird, sollte ohne Haftungsverlust keine Veränderung der Beschleunigung des Fahrzeugrades eintreten. Ist dies doch der Fall, kann dies auf einen Haftungsverlust des Fahrzeugrades hindeuten, was durch den erfindungsgemäße Beschleunigungssensor direkt detektiert werden kann, insbesondere ohne dass ein oder mehrere Sensorsignale zuvor ausgewertet oder weiterverarbeitet werden müssten.

Weiter vorzugsweise ist die bewegliche Masse in einer geschlossenen Kammer angeordnet, wobei zwei Federelemente die Masse mit einer Innenwandung der Kammer verbinden. Die Kammer besteht vorzugsweise aus geschlossenem und gehärtetem Kunststoff, Keramik oder Metall. Dadurch wird der Beschleunigungssensor widerstandsfähig beispielsweise gegenüber Schmutz, Flüssigkeit und Staub. So kann ein Beschleunigungssensor über einen gesamten Wartungszyklus, vorzugsweise einen gesamten Lebenszyklus eines Fahrzeugs verwendet werden. Ein Beschleunigungssensor, welcher in einem Reifen eines Fahrzeugs eingebaut ist, wird bei Reifenwechsel mit ausgetauscht. So reicht es bereits aus, wenn der Beschleunigungssensor eine Lebensdauer aufweist, die einem Lebenszyklus eines Reifens entspricht.

Ein Vorteil des Beschleunigungssensors gemäß dem zweiten Aspekt der Erfindung ist der konstruktiv besonders einfache Aufbau und eine kostengünstige Herstellung. Bei geringen Auslenkungen der Masse aus der Ruheposition entspricht die auf die Masse ausgeübte Kraft dem Hookeschen Gesetz. Dadurch ist eine quantitative Berechnung der auf die Masse ausgeübten Beschleunigung anhand der Auslenkung der Masse aus der Ruheposition besonders einfach.

Gemäß einer bevorzugten Ausführungsform des Beschleunigungssensors ist die Masse pendelartig an einem Mittelpunkt des Kreisbogenabschnitts befestigt. Dabei ist die Masse im Einbauzustand des Beschleunigungssensors vorzugsweise an oder in einem Fahrzeugrad angeordnet und im Wesentlichen in Rotationsrichtung des Fahrzeugrades auslenkbar. Die pendelartige Aufhängung der Masse ist vorzugsweise derart ausgebildet, dass der Aufhängepunkt innerhalb der Kammer liegt, in welcher die Masse angeordnet ist. Der Kreisbogenabschnitt weist dann einen Radius auf, der wesentlich kleiner als der Radius des Fahrzeugrades an der Einbauposition ist. Weiter bevorzugt ist die Masse im Wesentlichen stockankerförmig ausgebildet ist, nämlich mit einer geraden Stange, an deren Ende ein kreisbogenförmiger Abschnitt angeordnet ist.

Nach einer weiteren bevorzugten Ausführungsform des Beschleunigungssensors umfasst die Ausleseeinheit eine Kontaktfläche und ist ausgebildet, einen Berührungskontakt der Masse an der Kontaktfläche zu detektieren. Insbesondere bei Verwendung einer stockankerförmigen Masse wird dadurch ein Beschleunigungssensor geschaffen, welcher bereits bei geringen Auslenkungen in Berührungskontakt mit einer Kontaktfläche gelangt. Denn der kreisbogenförmige Abschnitt schafft zwei Arme, die sich ausgehend von der gerade Stange in Auslenkungsrichtung erstrecken.

In einer weiteren bevorzugten Ausführungsform des Beschleunigungssensors ist die Ausleseeinheit ausgebildet, eine Position der Masse in Rotationsrichtung des Fahrzeugrades zu ermitteln. Dadurch kann die auf die Masse ausgeübte Beschleunigung und somit der Haftungsgrad des Fahrzeugrades quantitativ ermittelt werden.

Die eingangs genannte Aufgabe wird gemäß einem dritten Aspekt der Erfindung gelöst durch eine Anordnung zum Detektieren eines Haftungsverlusts eines Fahrzeugrades, umfassend einen ersten Beschleunigungssensor gemäß der oben beschriebenen Art, welcher an einem Fahrzeugrad angeordnet ist, eine Warneinheit, welche ausgebildet ist, bei Detektion eines Haftungsverlusts mittels des Beschleunigungssensors einen Fahrzeugführer über den Haftungsverlust zu informieren.

Die Warneinheit kann vorzugsweise eine Anzeige sein, die von dem Fahrzeugführer wahrnehmbar ist. Die Anzeige kann ein analoges Rundinstrument, eine Digital- oder Balkenanzeige an den Armaturen des Fahrzeugcockpits oder ein Head-Up-Display sein. Die Anzeige ist vorzugsweise ausgebildet, den Grad der Haftung in Prozent darzustellen (100% Haftung bis zum vollständigen Gleiten mit 0% Haftung). Weiter vorzugsweise umfasst die Warneinheit eine akustischen Warneinheit und/oder ein Lenkrad, welche(s) zur Warnung vibriert.

Nach einer bevorzugten Ausführungsform der erfindungsgemäßen Anordnung ist ein zweiter (Duplex-) Beschleunigungssensor, insbesondere nach der oben beschriebene Art, am Fahrzeugrad angeordnet, insbesondere bezogen auf einen Mittelpunkt des Kreisbogenabschnitts gegenüberliegend zum ersten Beschleunigungssensor. Dieser zweite Beschleunigungssensor bzw. die Ausführungsform mit dem zweiten Beschleunigungssensor kann auch als Duplex-Beschleunigungssensor bezeichnet werden. Mit anderen Worten: Der zweite (Duplex-) Beschleunigungssensor ist in Rotationsrichtung des Fahrzeugrades um 180° versetzt zum ersten Beschleunigungssensor angeordnet. Werden die Auslenkungen der Masse des ersten und zweiten Beschleunigungssensors in Laufrichtung gesehen in Summe betrachtet, heben sich lineare Beschleunigungen des Rades auf und Rotationsbeschleunigungen addieren sich. Dadurch können störende Effekte, die unabhängig von einem Haftungsverlust eines Fahrzeugrades auftreten, wie beispielsweise Unwuchten aber auch falschpositive Auslenkungen der Masse aufgrund einer linearen Beschleunigung des ganzen Rades (z.B. durch Schlaglöcher) herausgerechnet werden.

Die erfindungsgemäße Anordnung umfasst eine Steuerungseinheit, welche ausgebildet ist, die Fahrzeugbremse und/oder den Fahrzeugmotor anzusteuern, um eine Beschleunigung, insbesondere eine Test-Beschleunigung, wenigstens eines Fahrzeugrades zu bewirken. Die Steuerungseinheit hat den Zweck, Beschleunigungen eines oder mehrerer der Fahrzeugräder (durch Bremsen oder Motorbeschleunigung) zu bewirken, um einen geringen Haftungsverlust zu bewirken, welcher zur Ermittlung des Grades des Haftungsverlusts dient. So kann die Steuerungseinheit vorzugsweise ausgebildet sein,
a. in regelmäßigen zeitlichen Abständen Beschleunigungen auf eines oder mehrere der Fahrzeugräder zu bewirken, insbesondere automatisch in kritischen Fahrzuständen (z.B. bei Ansprechen eines Regensensors oder generell unterhalb von 3° Celsius).
b. Eine bevorzugte Fortbildung der vorstehend genannten Ausführungsform umfasst ein Betätigungselement, welches ausgebildet ist, insbesondere in verdächtigen Fahrsituationen (z.B. Regen und Tempo 160 km/h, wobei der Erfinder hier nicht seine Fahrweise wiedergibt und sich auch davon distanziert), bei Betätigung durch einen Fahrzeugführer ein Test-Beschleunigungssignal an die Steuerungseinheit zu senden, um eine Beschleunigung wenigstens eines Fahrzeugrades zu bewirken. Das Betätigungselement ist vorzugsweise als Taster ausgebildet, welcher an den Armaturen des Fahrzeugcockpits angeordnet ist und vom Fahrzeugführer betätigt werden kann, wenn er die Haftung eines oder mehrerer Fahrzeugräder auf der Fahrbahn testen möchte. Das Betätigungselement kann als manuelles Betätigungselement ausgebildet und/oder Teil der Steuerungseinheit sein.

Die eingangs genannte Aufgabe wird gemäß einem vierten Aspekt der Erfindung gelöst durch ein Verfahren zum Detektieren eines Haftungsverlusts eines Fahrzeugrades, mit den Schritten:
a) Verifizieren eines Haftungsverlusts eines Fahrzeugrades, wenn der Haftungsverlust mittels eines an dem Fahrzeugrad angeordneten Beschleunigungssensors, insbesondere eines Beschleunigungssensors der oben beschriebenen Art, detektiert wird, wobei das Verifizieren erfolgt durch
   i. Beschleunigen des Fahrzeugrades mittels einer Fahrzeugbremse und/oder eines Fahrzeugmotors,
   ii. Detektieren eines Haftungsverlustes während des Beschleunigens mittels des Beschleunigungssensors,
b) Informieren eines Fahrzeugführers über den verifizierten Haftungsverlusts mittels einer Warneinheit.

Mit der Erfindung wurde erkannt, dass eine Verifikation eines detektierten Haftungsverlusts wünschenswert ist, insbesondere frühzeitig bei beginnenden Haftungsverlusten geringer Intensität, die noch keine Gefahr für das stabile Fahrverhalten darstellen. Das erfindungsgemäße Verfahren löst dieses Problem durch einen aktiven Test, bei dem eines oder mehrere Fahrzeugräder beschleunigt werden, um zu detektieren, ob ein erneuter Haftungsverlust auftritt. Die Beschleunigung erfolgt vorzugsweise durch einen Bremseingriff, eine abrupte Fahrzeugmotorbeschleunigung oder auch durch ein KERS (Kinetic Energy Recovery System). Initiiert wird die Beschleunigung vorzugsweise durch eine Steuerungseinheit der oben beschriebenen Art, welche ausgebildet ist, die Fahrzeugbremse und/oder den Fahrzeugmotor anzusteuern, um eine Beschleunigung wenigstens eines Fahrzeugrades zu bewirken. Weiter bevorzugt erfolgt die Beschleunigung an wenigstens zwei Rädern, die sich diagonal einander gegenüberstehen, beispielsweise das Rad vorne links und das Rad hinten rechts. Insbesondere bevorzugt erfolgt eine Kompensation des testbeeschleunigten Rades an den übrigen 3 Rädern. Vorzugsweise erfährt das diagonal gegenüber liegende Rad eine Beschleunigung mit gleichem Vorzeichen und die beiden anderen Räder eine Beschleunigung mit entgegengesetzten Vorzeichen. Dadurch wird sowohl die Schleudergefahr beim Testen des Haftungsverlusts gemindert als auch die Beschleunigung des gesamten PKW gemindert oder verhindert.

Nach einer bevorzugten Ausführungsform des erfindungsgemäßen Verfahrens erfolgt das Beschleunigen des Fahrzeugrades durch mehrere, zeitlich aufeinander folgende Beschleunigungen mit unterschiedlicher, insbesondere ansteigender Intensität. Dadurch wird ein Verfahren geschaffen, mittels dessen ein Grad der Haftung des Fahrzeugrades ermittelt werden kann. Vorzugsweise erfolgen zeitnah nach dem Detektieren eines Haftungsverlusts in schneller Folge und mit ansteigender Intensität Beschleunigungen des jeweiligen Rades. Anhand der Beschleunigungsintensität, bei der ein Haftungsverlust auftritt, wird der Grad der Haftung ermittelt. Dazu erfolgen die Beschleunigungen zunächst mit geringer Intensität. Mit jeder weiteren Beschleunigung nimmt die Intensität zu, solange bis ein Haftungsverlust detektiert wird. Darauf folgen weitere leichte Steigerungen der Beschleunigungen, um den Beschleunigungsgrad, bei dem der Haftungsverlust eintritt weiter zu verifizieren.

Eine bevorzugte Fortbildung des erfindungsgemäßen Verfahrens umfasst den Schritt: Anzeigen eines relativen Haftungsverlusts in Abhängigkeit der Intensität der Beschleunigung, bei welcher der Haftungsverlust verifiziert wird. Das Anzeigen kann bevorzugt mittels einer Anzeige der oben beschriebenen Art erfolgen.

Die eingangs genannte Aufgabe wird gemäß einem fünften Aspekt der Erfindung gelöst durch ein Verfahren zum Detektieren eines Haftungsverlusts eines Fahrzeugrades, mit den Schritten:
a) Beschleunigen eines Fahrzeugrades mittels einer Fahrzeugbremse und/oder eines Fahrzeugmotors, wenn ein Betätigungselement durch einen Fahrzeugführer betätigt wird,
b) während des Beschleunigens, Detektieren eines Haftungsverlustes des Fahrzeugrades mittels eines Beschleunigungssensors gemäß der oben beschriebenen Art.

Bevorzugt wird in einem weiteren Schritt des Verfahrens die Aufmerksamkeit des Fahrzeugführers auf den Haftungsverlust gelenkt, beispielsweise indem der Haftungsverlust auf einer Anzeige angezeigt wird.

Gemäß einer bevorzugten Ausführungsform des erfindungsgemäßen Verfahrens erfolgt das Beschleunigen des Fahrzeugrades durch mehrere, zeitlich aufeinander folgende Beschleunigungen mit unterschiedlicher, insbesondere ansteigender Intensität.

Gemäß einer Fortbildung der vorstehend genannten Ausführungsform wird ein Grad der Haftung in Abhängigkeit von der Intensität der Beschleunigung, bei welcher der Haftungsverlust detektiert wird, angezeigt.

Bevorzugten Ausführungsformen der Erfindung werden beispielhaft anhand der beiliegenden Figuren beschrieben. Es zeigen:
- Figur 1:: eine schematische Darstellung eines ersten Ausführungsbeispiels eines erfindungsgemäßen Beschleunigungssensors,
- Figur 2:: eine schematische Darstellung eines zweiten Ausführungsbeispiels eines erfindungsgemäßen Beschleunigungssensors,
- Figur 3:: eine schematische Darstellung eine dritten Ausführungsbeispiels eines erfindungsgemäßen Beschleunigungssensors,
- Figur 4:: eine schematische Darstellung eines vierten Ausführungsbeispiels eines erfindungsgemäßen Beschleunigungssensors,
- Figur 5:: eine schematische Darstellung eines fünften Ausführungsbeispiels eines erfindungsgemäßen Beschleunigungssensors, und
- Figur 6:: eine schematische Darstellung einer erfindungsgemäßen Anordnung.

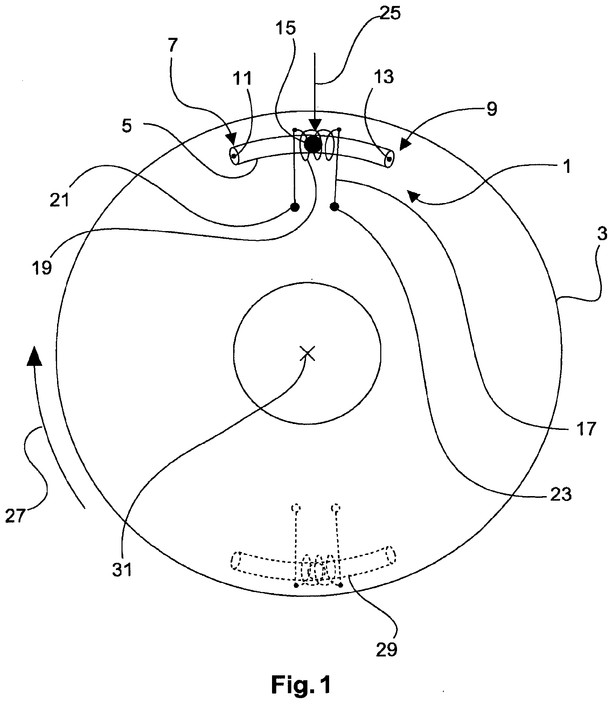

Die in den Figuren 1 bis 6 schematisch dargestellten Ausführungsbeispiele sind keine maßstabsgetreuen Abbildungen. Insbesondere das Größenverhältnis des Beschleunigungssensors zum Fahrzeugrad ist nicht maßstabsgetreu, in der praktischen Umsetzung wird der Beschleunigungssensor deutlich kleiner sein als dargestellt.

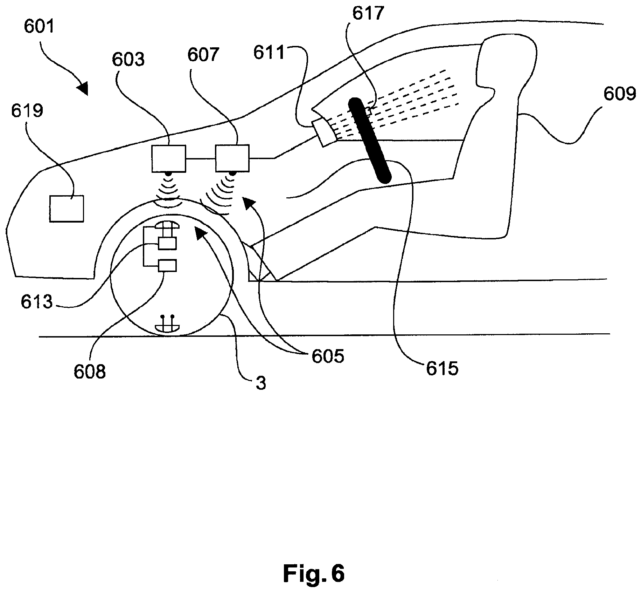

Figur 1 zeigt schematisch einen Beschleunigungssensor 1 in einem Einbauzustand an einem Fahrzeugrad 3. Der Beschleunigungssensor 1 ist Teil einer in Fig. 6 gezeigten Anordnung 601 zum Detektieren eines Haftungsverlusts des Fahrzeugrades 3.

Der Beschleunigungssensor 1 weist einen Tubus 5 mit einer Längsachse auf, die einen Kreisbogenabschnitt bildet. Der Tubus 5 weist geschlossenen Enden 7 und 9 auf. An den Enden 7 bzw. 9 ist jeweils eine Kontaktfläche 11 bzw. 13 angeordnet, welche dem Inneren des Tubus 5 zugewandt ist.

Eine Kugel 15, welche eine aus Stahl bestehende Masse bildet, ist innerhalb des Tubus 5 und in Längsrichtung des Tubus 5 beweglich angeordnet. Der Tubus 5 ist mit einem nicht dargestellten Fluid gefüllt. Eine Spule 17 umgibt den Tubus 5 mittels eines den Tubus mehrfach umlaufenden Spulendrahtes 19. Die Spule 17 wird über zwei elektrische Kontakte 21 und 23 mit Strom versorgt, um eine anziehende magnetische Kraft auf die Kugel 15 auszuüben und einer Bewegung der Kugel 15, in Rotationsrichtung 27 des Fahrzeugrades 3, aus einer Ruheposition 25 entgegenzuwirken.

Eine in Fig. 6 dargestellte Steuerungseinheit 603 steuert eine Stromversorgung 613 der Spule 17. Dabei wird eine positive Beschleunigung des Fahrzeugrades 3 in Rotationsrichtung 27 durch einen Fahrzeugmotor berücksichtigt. D.h. wenn das Fahrzeugrad 3 in Rotationsrichtung 27 durch eine Drehmomentsteigerung des Fahrzeugmotors beschleunigt wird, bewirkt die Steuerungseinheit 603, dass die Spule eine erhöhte Kraft auf die Kugel 15 ausübt, damit diese in der Ruheposition 25 verbleibt (sofern nicht andere Beschleunigungseffekte auftreten). Zudem wird eine negative Beschleunigung des Fahrzeugrades 3 entgegen der Rotationsrichtung 27 durch eine Fahrzeugbremse berücksichtigt. D.h. wenn das Fahrzeugrad 3 entgegen der Rotationsrichtung 27 durch die Fahrzeugbremsen abgebremst wird, bewirkt die Steuerungseinheit 603, dass die Spule eine erhöhte Kraft auf die Kugel 15 ausübt, damit diese in der Ruheposition 25 verbleibt. Durch den Ausgleich von positiven Beschleunigungen (Motor) und negativen Beschleunigungen (Bremsen) kann anhand einer Bewegung der Kugel 15 aus der Ruheposition 25 eine Haftungsverlust des Fahrzeugrades 3 abgelesen werden. Dreht das Fahrzeugrad 3 beispielweise aufgrund eines Haftungsverlusts durch, bewegt sich die Kugel 15 in Betrachtungsrichtung der Fig. 1 gesehen nach links aus der Ruheposition 25 heraus. Blockiert das Fahrzeugrad 3 aufgrund eines Haftungsverlusts beim Bremsen des Fahrzeugs, bewegt sich die Kugel 15 in Betrachtungsrichtung der Fig. 1 gesehen nach rechts.

Zusätzlich zum Beschleunigungssensor 1 ist ein zweiter Duplex-Beschleunigungssensor 29 im Fahrzeugrad 3 angeordnet, welcher funktionsgleich zum ersten Beschleunigungssensor 1 aufgebaut ist. Der zweite Beschleunigungssensor 29 ist bezogen auf den Mittelpunkt 31 des Kreisbogenabschnitts gegenüberliegend zum Beschleunigungssensor 1 angeordnet. Mit anderen Worten: Der zweite Beschleunigungssensor 29 ist in Rotationsrichtung 27 um 180° versetzt zum ersten Beschleunigungssensor 1 angeordnet.

Fig. 6 zeigt zudem eine Auswerteeinheit 605 mit einer Auswerteelektronik 607 und Ausleseeinheit 608. Die Ausleseeinheit 608 umfasst die in Fig. 1 gezeigten Kontaktflächen 11 und 13. Eine Kommunikation zwischen der Auswerteelektronik 607 und der Ausleseeinheit 608 erfolgt drahtlos. Die Ausleseeinheit 608 detektiert, wenn die Kugel 15 in Berührung mit einer der Kontaktflächen 11 oder 13 gelangt. Ein Berührungskontakt der Kugel 15 mit einer der Kontaktflächen 11 oder 13 repräsentiert einen Haftungsverlust. Dieser Haftungsverlust wird einem Fahrzeugführer 609 mittels einer Anzeige 611 optisch angezeigt. Die Steuerungseinheit 603 kommuniziert drahtlos mit der Stromversorgung 613 zur Steuerung der Kraft, welche die Spule 17 auf die Kugel 15 ausübt.

An einem Fahrzeuglenkrad 615 ist ein Betätigungselement 617 in Form eines Tasters angeordnet. Wenn der Fahrzeugführer 609 das Betätigungselement 617 betätigt, wird ein Beschleunigungssignal an eine Steuerungseinheit 619 gesendet. Die Steuerungseinheit 619 ist ausgebildet, den Fahrzeugmotor und/oder die Fahrzeugbremse anzusteuern, um eine positive oder negative Beschleunigung auf das Fahrzeugrad 3 auszuüben.

Die in Fig. 6 dargestellte Anordnung kann zur Durchführung eines Ausführungsbeispiels eines erfindungsgemäßen Verfahrens zum Detektieren eines Haftungsverlusts eines Fahrzeugrades gemäß dem vierten Aspekt der Erfindung verwendet werden. In einem ersten Verfahrensschritt A wird in regelmäßigen zeitlichen Abständen mittels eines an dem Fahrzeugrad 3 angeordneten Beschleunigungssensor 1 getestet, ob ein Haftungsverlust vorliegt. Sobald ein Haftungsverlust detektiert wird, wird dieser Haftungsverlust in einem Verfahrensschritt B verifiziert. Das Verifizieren des Haftungsverlusts erfolgt durch die folgenden Schritte: In einem ersten Verfahrensschritt i. wird das Fahrzeugrad 3 mittels der Fahrzeugbremse und/oder des Fahrzeugmotors beschleunigt. Die Beschleunigung wird bewirkt mittels der Steuerungseinheit 619. In einem weiteren Verfahrensschritt ii. wird mittels des Beschleunigungssensors 1 detektiert, ob während des Beschleunigens ein Haftungsverlust vorliegt. In einem Verfahrensschritt C wird der Fahrzeugführer 609 über den verifizierten Haftungsverlusts mittels der Anzeige 611 informiert.

Die in Fig. 6 dargestellte Anordnung kann außerdem zur Durchführung eines zweiten Ausführungsbeispiels eines erfindungsgemäßen Verfahrens zum Detektieren eines Haftungsverlusts des Fahrzeugrades 3 gemäß einem fünften Aspekt der Erfindung verwendet werden. In einem ersten Verfahrensschritt AA wird das Betätigungselement 617 durch den Fahrzeugführer 609 betätigt. Auf das Betätigen hin sendet das Betätigungselement 617 ein Beschleunigungssignal an die Steuerungseinheit 619, welche eine Beschleunigung des Fahrzeugrades 3 bewirkt. Dadurch wird in einem Verfahrensschritt BB das Fahrzeugrad 3 mittels der Fahrzeugbremse und/oder mittels des Fahrzeugmotors beschleunigt. Während des Beschleunigens wird in einem Verfahrensschritt CC ein Haftungsverlust des Fahrzeugrades 3 mittels des Beschleunigungssensors 1 detektiert.

Das Beschleunigen gemäß dem Verfahrensschritt BB erfolgt durch mehrere aufeinander folgende Beschleunigungen ansteigender Intensität. Zunächst wird das Fahrzeugrad leicht beschleunigt. Wenn kein Haftungsverlust bei dieser leichten Beschleunigung detektiert wird, wird das Fahrzeugrad erneut mit einer erhöhten Intensität beschleunigt. Die Intensität der Beschleunigung wird mit jeder erneuten Beschleunigung solange gesteigert, bis ein Haftungsverlust detektiert wird. Anhand der Intensität der Beschleunigung, bei der ein Haftungsverlust detektiert wird, kann unter Anwendung von Erfahrungswerten ein Grad der Haftung ermittelt werden. Der Grad der Haftung kann in einem Verfahrensschritt DD mittels der Anzeige 611 dem Fahrzeugführer 609 angezeigt werden.

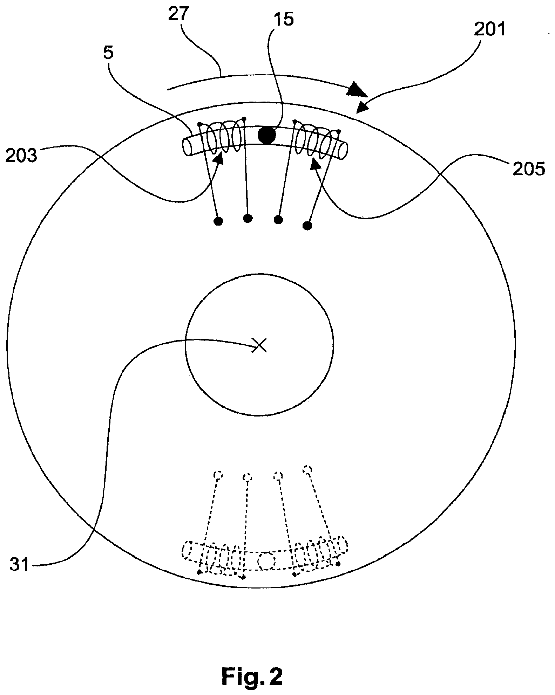

Figur 2 zeigt schematisch einen Beschleunigungssensor 201 in einem Einbauzustand an einem Fahrzeugrad 3. Der Beschleunigungssensor 201 ist ähnlich zum dem in Fig. 1 gezeigten Beschleunigungssensor 1 aufgebaut. Gleiche und funktionsgleiche Elemente sind mit denselben Bezugszeichen versehen. Im Unterschied zu dem in Fig. 1 gezeigten Beschleunigungssensor 1 weist der Beschleunigungssensor 201 zwei Spulen 203 und 205 auf, die jeweils eine abstoßenden magnetische Kraft auf die Kugel 15 ausüben, um einer Bewegung der Kugel 15 aus der Ruheposition entgegenzuwirken.

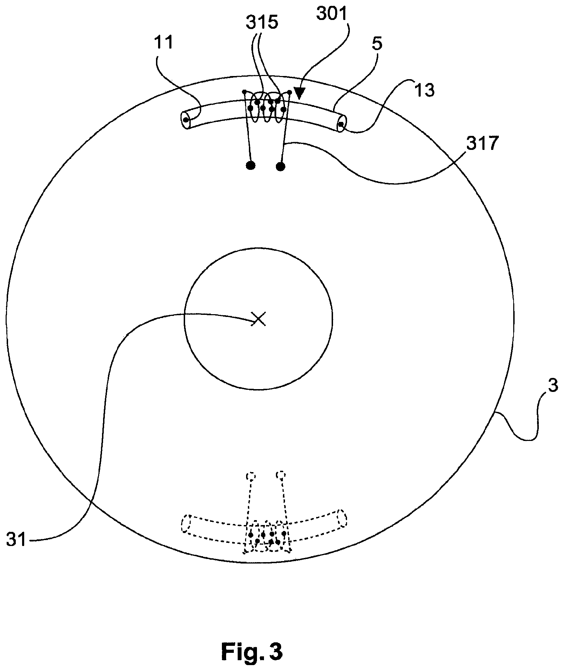

Fig. 3 zeigt schematisch einen Beschleunigungssensor 301 in einem Einbauzustand in einem Fahrzeugrad 3. Der Beschleunigungssensor 301 ist ähnlich zum dem in Fig. 1 gezeigten Beschleunigungssensor 1 aufgebaut. Gleiche und funktionsgleiche Elemente sind mit denselben Bezugszeichen versehen. Im Unterschied zum dem in Fig. 1 gezeigten Beschleunigungssensor 1 weist der Beschleunigungssensor 301 mehrere Kugeln 315 auf. Die Spule 317 übt eine anziehende Kraft auf die Kugeln 315 aus, um einer Bewegung der Kugeln 315 aus einer Ruheposition 25 entgegenzuwirken.

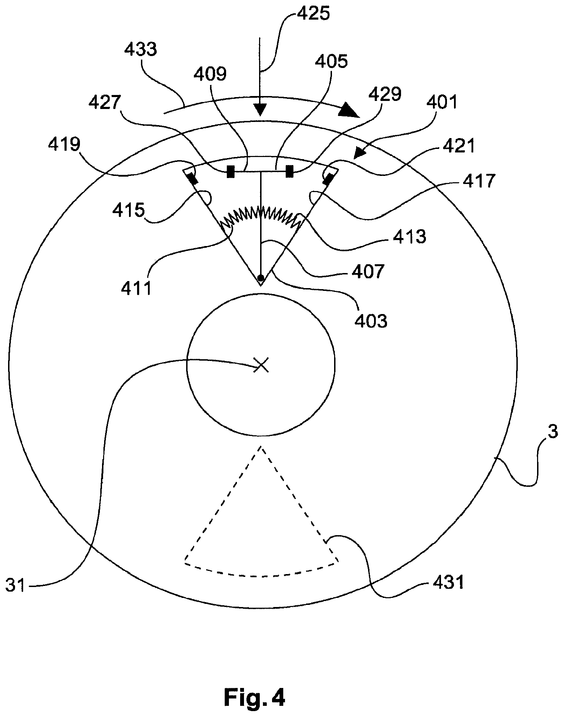

Fig. 4 zeigt schematisch einen Beschleunigungssensor 401 in einem Einbauzustand an einem Fahrzeugrad 3. Der Beschleunigungssensor 401 weist eine Kammer 403 auf, in der eine stockankerförmige Masse 405 mit einer geraden Stange 407 und einem kreisbogenförmigem Abschnitt 409 aufgehängt ist. Die Aufhängung liegt an einem ersten Ende der Stange 407, wobei sich der kreisbogenförmige Abschnitt 409 ausgehend von einem zweiten Ende der Stange in zwei Richtungen quer zur Längsachse der Stange 407 erstreckt. Jeweils eine Spiralfeder 411 bzw. 413 bildet eine Verbindung der Stange 407 mit einer Innenwandung 415 bzw. 417. Die Spiralfedern 411 und 413 wirken einem Ausschwenken der Masse 405 aus einer Ruheposition 425 entgegen. Die Kammer 403 weist jeweils eine Kontaktfläche 419 bzw. 421 auf, mit der ein Ende 427 bzw. 429 des Abschnitts 409 bei einem Ausschwenken der Masse 405 aus der Ruheposition 425 in Berührung gelangt. Mittels einer nicht gezeigten Ausleseeinheit wird diese Berührung eines Endes 427 bzw. 429 an einer Kontaktfläche 419 bzw. 421 detektiert. Ein zweiter Beschleunigungssensor 431, welcher funktionsgleich zum ersten Beschleunigungssensor 401 aufgebaut ist, ist in Rotationsrichtung 433 um 180° versetzt zum ersten Beschleunigungssensor 401 angeordnet.

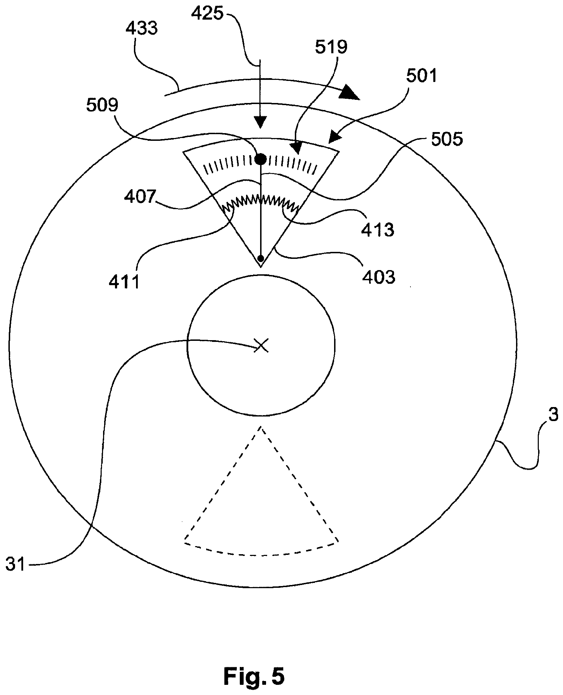

Fig. 5 zeigt schematisch einen Beschleunigungssensor 501 in einem Einbauzustand an einem Fahrzeugrad 3. Der Beschleunigungssensor 501 ist ähnlich zum Beschleunigungssensor 401 aufgebaut. Gleiche und funktionsgleiche Elemente sind mit denselben Bezugszeichen versehen. Im Unterschied zu dem in Fig. 4 gezeigten Beschleunigungssensor 401 besteht die Masse 505, die pendelartig innerhalb der Kammer 403 angeordnet ist, aus einer Stange 407 und einer kugelförmigen Kopfmasse 509. Die Stange 407 ist an einem ersten Enden schwenkbar aufgehängt. Die Kopfmasse 509 ist an einem zweiten Ende der Stange angeordnet ist. Zudem weist der Beschleunigungssensor 501 mehrere Kontaktflächen 519 auf. Je nachdem, wie weit die Masse 505 aus einer Ruheposition 425 ausschwenkt, gelangt die kugelförmige Masse 509 in Kontakt mit einer von mehreren Kontaktflächen 519. Eine nicht dargestellte Ausleseeinheit detektiert, mit welcher der Kontaktflächen 519 die Kugel 509 in Kontakt steht. Dadurch wird der Grad der Auslenkung der Masse aus der Ruheposition 425 bestimmt.

### Bezugszeichen

- 1: Beschleunigungssensor
- 3: Fahrzeugrad
- 5: Tubus
- 7,9: Ende
- 11, 13: Kontaktfläche
- 15: Kugel
- 17: Spule
- 19: Spulendraht
- 21, 23: Kontakte
- 25: Ruheposition
- 27: Rotationsrichtung
- 29: zweiter Beschleunigungssensor (Duplex-Beschleunigungssensor)
- 31: Mittelpunkt
- 201: Beschleunigungssensor
- 203,205: Spulen
- 301: Beschleunigungssensor
- 315: Kugeln
- 317: Spule
- 401: Beschleunigungssensor
- 403: Kammer
- 405: Masse
- 407: Stange
- 409: Abschnitt
- 411, 413: Spiralfeder
- 415, 417: Innenwandung
- 419, 421: Kontaktfläche
- 425: Ruheposition
- 427, 429: Ende
- 431: zweiter Beschleunigungssensor
- 433: Rotationsrichtung
- 501: Beschleunigungssensor
- 505: Masse
- 509: Kopfmasse
- 519: Kontaktflächen
- 601: Anordnung
- 603: Steuerungseinheit
- 605: Auswerteeinheit
- 607: Auswerteelektronik
- 608: Ausleseeinheit
- 609: Fahrzeugführer
- 611: Anzeige
- 613: Stromversorgung
- 615: Fahrzeuglenkrad
- 617: Betätigungselement
- 619: Steuerungseinheit

## Patentansprüche

1. Beschleunigungssensor zum Detektieren eines Haftungsverlusts eines Fahrzeugrades (3), umfassend:
- einen Tubus (5), mit einer Längsachse, die einen Kreisbogenabschnitt bildet, und mit zwei geschlossenen Enden (7; 9),
- eine Masse (15; 315), die innerhalb des Tubus (5) und in Längsrichtung des Tubus (5) beweglich angeordnet ist,
eine Magnetanordnung (17; 203; 205; 317), wobei die Magnetanordnung (17; 203; 205; 317) eine den Tubus (5) zumindest teilweise umgebende elektrische Spulenanordnung, insbesondere Kreisbogenspule, umfasst, welche ausgebildet ist, mittels einer auf die Masse (15; 315) ausgeübten magnetischen Kraft einer Bewegung der Masse (15; 315) aus einer Ruheposition (25) entgegenzuwirken, und
- eine Ausleseeinheit (608), welche ausgebildet ist, eine Bewegung der Masse (15; 315) aus der Ruheposition (25) zu detektieren,
- wobei der Tubus (5) derart am Fahrzeugrad anordenbar ist, dass eine Bewegung der Masse aus der Ruheposition erfolgt, wenn sich die Beschleunigung des Fahrzeugrades ändert.

2. Beschleunigungssensor nach einem der vorhergehenden Ansprüche,
wobei die Magnetanordnung einen Magnetabschnitt (17; 317) umfasst, welcher ausgebildet ist, eine anziehende Kraft auf die Masse (15; 315) auszuüben, und
wobei die Ruheposition (25) der Masse (15) in Rotationsrichtung (27) des Fahrzeugrades (3) innerhalb des Magnetabschnitts (17; 317) liegt.

3. Beschleunigungssensor nach einem der vorhergehenden Ansprüche,
wobei die Magnetanordnung zwei Magnetabschnitte (203; 205) umfasst, die ausgebildet sind, eine abstoßende Kraft auf die Masse (15) auszuüben, und
wobei die Ruheposition (25) der Masse (15) in Rotationsrichtung des Fahrzeugrades (3) zwischen den Magnetabschnitten (203; 205) liegt.

4. Beschleunigungssensor nach einem der vorhergehenden Ansprüche,
wobei die Ausleseeinheit (608) eine Kontaktfläche (11; 13) umfasst, die jeweils an einem Ende (7; 9) des Tubus (5) angeordnet ist, und die Ausleseeinheit (608) ausgebildet ist, einen Berührungskontakt der Masse (15) an der Kontaktfläche (11; 13) zu detektieren.

5. Beschleunigungssensor nach einem der vorhergehenden Ansprüche, umfassend eine Steuerungseinheit (603), welche ausgebildet ist, die mittels der Spulenanordnung (17; 203; 205; 317) auf die Masse (15; 315) ausgeübte Kraft in Abhängigkeit von der auf das Fahrzeugrad (3) mittels der Fahrzeugbremsen und des Fahrzeugmotors ausgeübten Beschleunigung zu steuern.

6. Anordnung zum Detektieren eines Haftungsverlusts eines Fahrzeugrades, umfassend:
- einen ersten Beschleunigungssensor (1; 201; 301; 401; 501) nach einem der vorhergehenden Ansprüche 1 bis 6, welcher an einem Fahrzeugrad (3) angeordnet ist,
- eine Warneinheit (611), welche ausgebildet ist, bei Detektion eines Haftungsverlusts mittels des Beschleunigungssensors (1; 201; 301; 401; 501) einen Fahrzeugführer (609) über den Haftungsverlust zu informieren, und
- eine Steuerungseinheit (619), welche ausgebildet ist, die Fahrzeugbremse und/oder den Fahrzeugmotor anzusteuern, um eine Beschleunigung wenigstens eines Fahrzeugrades (3) zu bewirken, um einen geringen Haftungsverlust zu bewirken, wobei die Anordnung zum Detektieren eines Haftungsverlusts eines Fahrzeugrades eingerichtet ist, aus der Beschleunigung, bei der der Haftungsverlust detektiert wird, ein Grad der Haftung zu ermitteln.

7. Anordnung nach dem vorhergehenden Anspruch,
wobei ein zweiter Duplex-Beschleunigungssensor (29; 431), insbesondere nach einem der Ansprüche 1 bis 6, am Fahrzeugrad (3) angeordnet ist, insbesondere bezogen auf einen Mittelpunkt (31) des Kreisbogenabschnitts gegenüberliegend zum ersten Beschleunigungssensor (1; 401).

8. Anordnung nach Anspruch 6 oder 7, umfassend:
ein Betätigungselement (617), welches ausgebildet ist, bei Betätigung durch einen Fahrzeugführer (609) ein Beschleunigungssignal an die Steuerungseinheit (619) zu senden, um eine Beschleunigung wenigstens eines Fahrzeugrades (3) zu bewirken.

9. Verfahren zum Detektieren eines Haftungsverlusts eines Fahrzeugrades, mit den Schritten:
a) Verifizieren (B) eines Haftungsverlusts eines Fahrzeugrades (3), wenn der Haftungsverlust mittels eines an dem Fahrzeugrad (3) angeordneten Beschleunigungssensors (1; 201; 301; 401; 501) nach einem der Ansprüche 1 bis 6, detektiert wird (A), wobei das Verifizieren erfolgt durch
i. Beschleunigen des Fahrzeugrades (3) mittels einer Fahrzeugbremse und/oder eines Fahrzeugmotors,
ii. Detektieren eines Haftungsverlustes während des Beschleunigens mittels des Beschleunigungssensors (1),
b) Informieren (C) eines Fahrzeugführers (609) über den verifizierten Haftungsverlusts mittels einer Warneinheit (611).

10. Verfahren zum Detektieren eines Haftungsverlusts eines Fahrzeugrades, mit den Schritten:
a) Beschleunigen (BB) eines Fahrzeugrades (3) mittels einer Fahrzeugbremse und/oder eines Fahrzeugmotors, wenn ein Betätigungselement (617) durch einen Fahrzeugführer (609) betätigt (AA) wird,
b) während des Beschleunigens, Detektieren (CC) eines Haftungsverlustes des Fahrzeugrades (3) mittels eines Beschleunigungssensors (1; 201; 301; 401; 501) nach einem der Ansprüche 1 bis 6.

11. Verfahren nach Anspruch 10,
wobei das Beschleunigen (BB) des Fahrzeugrades (3) erfolgt durch mehrere, zeitlich aufeinander folgende Beschleunigungen mit unterschiedlicher, insbesondere ansteigender Intensität.

## Claims

1. Acceleration sensor for detecting a loss of road grip of a vehicle wheel (3), comprising:
- a tube (5) having a longitudinal axis forming an arc segment and having two closed ends (7; 9),
- a mass (15; 315) which is disposed inside the tube (5) and is movable in the longitudinal direction of the tube (5),
a magnet arrangement (17; 203; 205; 317), the magnet arrangement (17; 203; 205; 317) comprising an electric coil arrangement, in particular an arcuate coil, at least partially enclosing the tube (5), which is designed to counteract a movement of the mass (15; 315) out of an idle position (25) by means of a magnetic force exerted on the mass (15; 315), and
- a read-out unit (608) which is designed to detect a movement of the mass (15; 315) out of the idle position (25),
- wherein the tube (5) can be disposed on the vehicle wheel in such a way that a movement of the mass from the idle position occurs if the acceleration of the vehicle wheel changes.

2. Acceleration sensor as claimed in one of the preceding claims,
wherein the magnet arrangement comprises a magnet section (17; 317) which is designed to exert an attracting force on the mass (15; 315) and wherein the idle position (25) of the mass (15) lies within the magnet section (17; 317) in the direction of rotation (27) of the vehicle wheel (3).

3. Acceleration sensor as claimed in one of the preceding claims,
wherein the magnet arrangement comprises two magnet sections (203; 205) which are designed to exert a repelling force on the mass (15) and wherein the idle position (25) of the mass (15) lies between the magnet sections (203, 205) in the direction of rotation of the vehicle wheel (3).

4. Acceleration sensor as claimed in one of the preceding claims,
wherein the read-out unit (608) comprises a contact surface (11; 13) which is disposed respectively at an end (7; 9) of the tube (5) and the read-out unit (608) is designed to detect a physical contact of the mass (15) on the contact surface (11; 13).

5. Acceleration sensor as claimed in one of the preceding claims,
comprising a control unit (603) which is designed to control the force exerted on the mass (15; 315) by means of the coil arrangement (17; 203; 205; 317) depending on the acceleration exerted on the vehicle wheel (3) by means of the vehicle brakes and the vehicle engine.

6. Arrangement for detecting a loss of road grip of a vehicle wheel, comprising:
- a first acceleration sensor (1; 201; 301; 401; 501) as claimed in one of preceding claims 1 to 6, disposed on a vehicle wheel (3),
- a warning unit (611) which, if a loss of road grip is detected by the acceleration sensor (1; 201; 301; 401; 501), is designed to inform a vehicle driver (609) of the loss of road grip, and
- a control unit (619) which is designed to control the vehicle brake and/or the vehicle engine in order to effect an acceleration of at least one vehicle wheel (3) so as to effect a slight loss of road grip, wherein the arrangement for detecting a loss of road grip of a vehicle wheel is configured to determine, from the acceleration at which the loss of road grip is detected, a degree of road grip.

7. Arrangement as claimed in the preceding claim,
wherein a second duplex acceleration sensor (29; 431), in particular as claimed in one of claims 1 to 6, is disposed on the vehicle wheel (3), in particular lying opposite the first acceleration sensor (1; 401) by reference to a centre point (31) of the arc segment.

8. Arrangement as claimed in claim 6 or 7, comprising: an activation element (617) which is designed to send an acceleration signal to the control unit (619) when activated by a vehicle driver (609) in order to effect an acceleration of at least one vehicle wheel (3).

9. Method for detecting a loss of road grip of a vehicle wheel, comprising the steps:
a) verifying (B) a loss of road grip of a vehicle wheel (3) if the loss of road grip is detected (A) by means of an acceleration sensor (1; 201; 301; 401; 501) as claimed in one of claims 1 to 6 disposed on the vehicle wheel (3), wherein the verification is effected by
i. accelerating the vehicle wheel (3) by means of a vehicle brake and/or a vehicle engine,
ii. detecting a loss of road grip during the acceleration by means of the acceleration sensor (1),
b) informing (C) a vehicle driver (609) of the verified loss of road grip by means of a warning unit (611).

10. Method for detecting a loss of road grip of a vehicle wheel, comprising the steps:
a) accelerating (BB) a vehicle wheel (3) by means of a vehicle brake and/or a vehicle engine when an activation element (617) is activated (AA) by a vehicle driver (609),
b) during the acceleration, detecting (CC) a loss of road grip of the vehicle wheel (3) by means of an acceleration sensor (1; 201; 301; 401; 501) as claimed in one of claims 1 to 6.

11. Method as claimed in claim 10,
wherein the acceleration (BB) of the vehicle wheel (3) is effected by several successive accelerations of differing, in particular increasing, intensity.

## Revendications

1. Capteur d'accélération destiné à détecter une perte d'adhérence d'une roue de véhicule (3), comprenant :
- un tube (5), avec un axe longitudinal, qui forme une section en arc de cercle, et avec deux extrémités (7 ; 9) fermées,
- une masse (15 ; 315), qui est disposée à l'intérieur du tube (5) et de manière mobile dans la direction longitudinale du tube (5),
- un ensemble magnétique (17 ; 203 ; 205 ; 317), dans lequel l'ensemble magnétique (17 ; 203 ; 205 ; 317) comprend un ensemble de bobine électrique entourant au moins en partie le tube (5), en particulier une bobine en arc de cercle, laquelle est réalisée pour agir à l'encontre d'un mouvement de la masse (15 ; 315) à partir d'une position de repos (25) au moyen d'une force magnétique exercée sur la masse (15 ; 315), et
- une unité de lecture (608), laquelle est réalisée pour détecter un mouvement de la masse (15 ; 315) à partir de la position de repos (25),
- dans lequel le tube (5) peut être disposé au niveau de la roue de véhicule de telle sorte qu'un mouvement de la masse à partir de la position de repos s'effectue lorsque l'accélération de la roue de véhicule varie.

2. Capteur d'accélération selon l'une quelconque des revendications précédentes,
dans lequel l'ensemble magnétique comprend une section magnétique (17 ; 317), laquelle est réalisée pour exercer une force d'attraction sur la masse (15 ; 315), et
dans lequel la position de repos (25) de la masse (15) dans la direction de rotation (27) de la roue de véhicule (3) se situe à l'intérieur de la section magnétique (17 ; 317).

3. Capteur d'accélération selon l'une quelconque des revendications précédentes,
dans lequel l'ensemble magnétique comprend deux sections magnétiques (203 ; 205), qui sont réalisées pour exercer une force de répulsion sur la masse (15), et
dans lequel la position de repos (25) de la masse (15) dans la direction de rotation de la roue de véhicule (3) se situe entre les sections magnétiques (203 ; 205).

4. Capteur d'accélération selon l'une quelconque des revendications précédentes,
dans lequel l'unité de lecture (608) comprend une surface de contact (11; 13), qui est disposée respectivement au niveau d'une extrémité (7 ; 9) du tube (5), et l'unité de lecture (608) est réalisée pour détecter un contact de la masse (15) au niveau de la surface de contact (11 ; 13).

5. Capteur d'accélération selon l'une quelconque des revendications précédentes, comprenant une unité de commande (603), laquelle est réalisée pour commander la force exercée sur la masse (15 ; 315) au moyen de l'ensemble de bobine (17 ; 203 ; 205 ; 317) en fonction de l'accélération exercée sur la roue de véhicule (3) au moyen des freins de véhicule et du moteur de véhicule.

6. Ensemble pour détecter une perte d'adhérence d'une roue de véhicule, comprenant :
- un premier capteur d'accélération (1 ; 201 ; 301; 401; 501) selon l'une quelconque des revendications précédentes 1 à 6, lequel est disposé au niveau d'une roue de véhicule (3),
- une unité d'avertissement (611), laquelle est réalisée pour informer un conducteur de véhicule (609) de la perte d'adhérence au moyen du capteur d'accélération (1 ; 201 ; 301 ; 401 ; 501) lors de la détection d'une perte d'adhérence, et
- une unité de commande (619), laquelle est réalisée pour commander le frein de véhicule et/ou le moteur de véhicule, afin de provoquer une accélération d'au moins une roue de véhicule (3), afin de provoquer une légère perte d'adhérence, dans lequel l'ensemble pour détecter une perte d'adhérence d'une roue de véhicule est conçu pour déterminer un degré de l'adhérence à partir de l'accélération à laquelle la perte d'adhérence est détectée.

7. Ensemble selon la revendication précédente, dans lequel un deuxième capteur d'accélération duplex (29 ; 431), en particulier selon l'une quelconque des revendications 1 à 6, est disposé au niveau de la roue de véhicule (3), en particulier par rapport à un centre (31) de la section en arc de cercle à l'opposé du premier capteur d'accélération (1 ; 401).

8. Ensemble selon la revendication 6 ou 7, comprenant :
un élément d'actionnement (617), lequel est réalisé pour envoyer un signal d'accélération à l'unité de commande (619) lors de l'actionnement par un conducteur de véhicule (609), afin de provoquer une accélération d'au moins une roue de véhicule (3).

9. Procédé pour détecter une perte d'adhérence d'une roue de véhicule, avec les étapes :
a) de vérification (B) d'une perte d'adhérence d'une roue de véhicule (3), lorsque la perte d'adhérence est détectée (A) au moyen d'un capteur d'accélération (1 ; 201 ; 301 ; 401 ; 501) disposé au niveau de la roue de véhicule (3) selon l'une quelconque des revendications 1 à 6, dans lequel la vérification s'effectue par
i. accélération de la roue de véhicule (3) au moyen d'un frein de véhicule et/ou d'un moteur de véhicule,
ii. détection d'une perte d'adhérence pendant l'accélération au moyen du capteur d'accélération (1),
b) d'information (C) à un conducteur de véhicule (609) de la perte d'adhérence vérifiée au moyen d'une unité d'avertissement (611).

10. Procédé pour détecter une perte d'adhérence d'une roue de véhicule, avec les étapes :
a) d'accélération (BB) d'une roue de véhicule (3) au moyen d'un frein de véhicule et/ou d'un moteur de véhicule, lorsqu'un élément d'actionnement (617) est actionné (AA) par un conducteur de véhicule (609),
b) pendant l'accélération, de détection (CC) d'une perte d'adhérence de la roue de véhicule (3) au moyen d'un capteur d'accélération (1 ; 201 ; 301 ; 401 ; 501) selon l'une quelconque des revendications 1 à 6.

11. Procédé selon la revendication 10,
dans lequel l'accélération (BB) de la roue de véhicule (3) s'effectue par plusieurs accélérations se succédant dans le temps d'intensité différente, en particulier croissante.
